# EUROPEAN PATENT SPECIFICATION

(11) **EP 3 760 874 B1**
(45) Date of publication and mention of the grant of the patent: **29.03.2023**
(21) Application number: 19183550.3
(22) Date of filing: 01.07.2019
(51) Int. Cl.: F04D 29/26, F01D 5/02, F04D 29/66, G01M 1/30, G01M 1/34

(54) **TURBO CHARGER ASSEMBLY AND METHOD FOR BALANCING SAID TURBO CHARGER ASSEMBLY**
TURBOLADERANORDNUNG UND VERFAHREN ZUM AUSWUCHTEN EINER SOLCHEN TURBOLADERANORDNUNG
ENSEMBLE DE TURBOCOMPRESSEUR ET PROCÉDÉ D'ÉQUILIBRAGE D'UN TEL ENSEMBLE DE TURBOCOMPRESSEUR

(43) Date of publication of application: 06.01.2021
(73) Proprietor: BorgWarner, Inc., Auburn Hills, MI 48326-2872 (US)
(72) Inventor: Mohan, Karan, 67308 Albisheim (DE); Klein, Stefan, 66424 Homburg (Saar) (DE)
(74) Representative: Baur & Weber Patentanwälte PartG mbB

(56) References cited:
- DE-A1-102009 035 172
- US-A1- 2009 025 461
- US-A1- 2015 167 695
- US-A1- 2018 017 068

## Description

This invention relates to a turbo charger assembly and a method for assembly of a turbo charger.

Turbocharging devices are generally known which are intended for use as exhaust gas turbochargers in an internal combustion engine. Such devices are typically designed to supply air to an engine intake. For this purpose, a turbine housing is provided, which is arranged at an exhaust manifold of the internal combustion engine. A compressor housing is arranged in an intake manifold of the internal combustion engine, a bearing housing being connected to the turbine housing and the compressor housing. In the bearing housing a shaft is rotatably mounted, which connects a turbine wheel with the compressor wheel.

The hydrodynamic flow generated by exhaust gases is used to rotate the assembly consisting of the turbine wheel, the shaft and the compressor wheel. Typically, high rotational speeds are achieved which require proper imbalancing of the assembly. The balancing process requires a considerable amount of time and therefore affects the production time for a turbo charging device. The residual imbalance of the turbocharging device is however in some instances still too large though that the device will be rejected during quality assessment.

Accordingly, high-speed balancing of turbocharger devices is key process step towards higher productivity with lower scrap rate during manufacturing, already considerable effort has been made in order to improve those factors.

From US 8,944,771 B2 follows that turbochargers operate at extremely high speed, so balance of the rotating core is of the utmost importance to turbocharger life. A special frusto-conical, or frusto-spherical, centering geometry is added to the interface of the compressor nut and the nose of the compressor wheel to aid in keeping the wheel, nut, and stub-shaft centered on the turbocharger axis to reduce the degree of core unbalance.

In US 10,082,145 B2 a turbocharger including a turbine wheel, a shaft attached to the turbine wheel, and a compressor wheel disposed on the shaft opposite the turbine wheel is shown. The compressor wheel includes a back wall and an axial bore, and a pilot washer is located adjacent the compressor wheel back wall. The pilot washer has an inner diameter and an outer diameter and includes a conical pilot ring that extends into the axial bore of the compressor wheel. The pilot washer includes a slit extending from the inner diameter to the outer diameter. A nut is threaded to the shaft and is operative to provide an axial clamping force on the compressor wheel, thereby causing the pilot washer to contract onto the shaft as the pilot ring extends into the bore.

WO 2015/142517 A1 depicts a method of balancing turbocharger rotating assembly. The method includes installing a shaft-and-turbine wheel subassembly into a ball bearing cartridge within a bearing housing of a turbocharger, connecting a compressor wheel to the shaft, and testing the balance of the turbocharger rotating assembly while the turbocharger rotating assembly is installed within the bearing housing of the turbocharger. Based on the results of the balance testing, material is removed from the turbine wheel while the shaft-and-turbine wheel subassembly is installed within the bearing housing of the turbocharger. The step of removing the material from the turbine wheel comprises removing material from a peripheral edge of a backwall of the turbine wheel.

DE 10 2009 035172 relates to a method for balancing an impeller for an exhaust gas turbocharger comprising at least one impeller and a corresponding shaft, wherein the at least one impeller and the shaft are balanced, wherein an unbalance of the at least one impeller and the shaft remaining after balancing is marked.

US 2015/167695 A1 shows an impeller rotator including a turbine impeller, a compressor impeller, a shaft connecting the turbine impeller to the compressor impeller, and a connecting member fastening one of the turbine impeller and the compressor impeller to one axial end region of the shaft, and the connecting member is plastic-deformed so as to decrease overall imbalance of the turbine impeller, the compressor impeller, and the shaft. An imbalance direction of the turbine impeller is marked. Similarly, an imbalance direction of the compressor impeller is marked. Then, the turbine impeller is connected to the compressor impeller such that the markings of have an angle of 180 degrees therebetween. It is accordingly an object of the invention to provide a turbo charger assembly and a method for assembly of a turbo charger, which offer increased performances due to improved balancing results.

This object is achieved by present independent claims 1 and 4 of the invention. Further advantageous embodiments of the invention are subject of the subclaims.

According to a first aspect of the invention, a turbo charger assembly according to claim 1, in particular within a combustion engine, comprising a shaft with a turbine wheel and a compressor wheel on opposing ends of the shaft within a housing is provided, wherein the turbine wheel exhibits a first imbalance together with the shaft in a first angular position and the compressor wheel exhibits a second imbalance in a second angular position, wherein the alignment of the compressor wheel relative to the turbine wheel is performed by orientating the first imbalance and the second imbalance relative to each other such that a combined imbalance from the first imbalance and the second imbalance of the assembly is reduced.

The first imbalance is indicated by a first mark which is determined in separate imbalance steps of the shaft and the turbine wheel, wherein the imbalance of the shaft is indicated by a first shaft mark and the imbalance of the turbine wheel is indicated by a first turbine mark and the first mark indicates the remaining imbalance of the turbine wheel and the shaft. The second imbalance is indicated by a second mark which is determined during an imbalance step of the compressor wheel. The first mark and the second mark are used for relative orientation of the shaft with the turbine wheel and the compressor wheel during final mounting of the assembly.

The invention aims at the reduction of the combined imbalance resulting from the turbine wheel with the shaft and from the compressor wheel. In order to do so the first imbalance and the second imbalance are determined individually but respectively in relation to the orientation to the housing. Upon combining both components their orientation with respect to the housing and with respect to each other is selected such that the combined imbalance of the assembly is reduced. By reducing the combined imbalance turbocharger assemblies, which would otherwise be discarded, can now be used for series production. In addition, the amount of rework on each individual component can be reduced, which reduces the cycle time during production. Accordingly, the invention allows cost savings and in addition provides turbocharger assemblies with more stability over the production and manufacturing processes.

According to an embodiment of the invention, the first imbalance and the second imbalance are aligned opposite to each other.

The effect of reducing the combined imbalance of the compressor wheel and the turbine wheel can be maximized by aligning both components with respect to their individual imbalance opposite to each other. The orientation of the individual imbalance values can be determined relative to a reference point in order to align both components relative to each other.

In an example not according to the present invention, the first imbalance can be indicated by a first mark which is determined during a combined imbalance step of the shaft together with the turbine wheel.

Still outside the scope of the present invention, the turbine wheel and the shaft could be preassembled so that it is convenient to indicate the location of first imbalance by using the first mark.

According to the present invention, the first imbalance can be indicated by a first mark which is determined in separate imbalance steps of the shaft and the turbine wheel.

In particular, this is useful when the turbine wheel and the shaft are not preassembled or will be assembled at a later stage. It may also be useful for those production lines where and in balancing measurement has been performed on the turbine wheel or the shaft individually before final assembly of the turbine wheel on the shaft. The individual imbalance values are indicated separately for the turbine wheel and the shaft and are also combined into an additional mark.

The second imbalance is indicated by a second mark which is determined during an imbalance step of the compressor wheel.

Typically, the compressor wheel is finally attached to the shaft using for example nut or a screw. Accordingly, the compressor wheel will be subjected to an imbalance procedure as an individual component. The orientation of the resulting second imbalance is indicated by using the second mark.

The first mark and the second mark are used for relative orientation of the components during final mounting of the assembly.

During final assembly both marks are used in order to align the turbine wheel with the shaft relative to the compressor wheel such that the combined imbalance is reduced. This can be performed either manually or in an automatic procedure. In the latter case, sends or equipment will be needed in order to place the compressor wheel and opposite direction to the shaft and turbine wheel assembly using a robot arm or the like. It is important that the compressor wheel does not move or rotate relative to the shaft during the pre-tightening step in which the compressor wheel is finally assembled on the shaft.

According to a second aspect of the invention, a method according to claim 4 for assembly of a turbo charger is described comprising the steps of: providing a shaft, a turbine wheel and a compressor wheel, determining a first imbalance of the turbine wheel mounted on an end of the shaft, marking a first angular position on the turbine wheel corresponding to the first imbalance, determining a second imbalance of the compressor wheel, marking a second angular position on the compressor wheel corresponding to the second imbalance, and mounting the compressor wheel on an opposing end of the shaft with an orientation relative to the turbine wheel such that a combined imbalance from the first imbalance and the second imbalance of the assembly is reduced.

Reducing the combined imbalance allows to assemble a turbocharger with components which would otherwise exceed a tolerable value for the remaining imbalance. In particular, the individual remaining imbalances of the compressor wheel and the turbine wheel can in some instances not to be further reduced during an individual imbalancing step as this typically requires removing material from the respective wheel, which is limited to the thickness for example of the wheel base plate. Due to decreasing dimensions of turbocharger components the overall amount of material which can be removed is thus limited. Although mounting the turbocharger such that the orientation of the turbine wheel relative to the compressor wheel can be determined requires a further process step, the high-speed balancing process is more efficient as compared to mounting both components without any reference to each other. Accordingly, lower residual imbalance of values of the assembled components can be achieved by using the individual imbalances as counterbalance effects during assembly.

In order to maximize the effect, the orientation between the first angular position and the second angular position can be selected opposite to each other.

In this respect, the term "opposite" does not necessarily mean an orientation of the remaining imbalances exactly 180° relative to each other but within the certain window around this value. Whether this window can be selected as low as 10° or even lower will depend on the amount of tolerable overall imbalance of the assembly.

According to a further embodiment of the invention the mounted assembly is subjected a further unbalancing step.

Although the inventive method will reduce the overall imbalance, a further unbalancing step after assembly may be possible in order to achieve an even lower overall imbalance.

In an example not according to the present invention, determining the first imbalance comprises a measurement step of the assembled turbine wheel on the shaft.

According to the present invention, however, determining the first imbalance comprises measuring imbalances of the turbine wheel and of the shaft separately and combining the measurements into the first imbalance.

Furthermore, reference points are provided on the turbine and on the compressor wheel in order to determine the relative orientation to a housing of the turbo charging assembly.

The first angular position and the second angular position can be marked relative to the reference points.

The final mounting of the assembly is performed using the first angular position and the second angular position.

Finally, an exhaust gas turbo charger having a turbine as outlined above is described.

In the following, some examples of the invention are explained in more detail using the drawing, wherein:
- Figure 1: shows a cross-sectional view of a turbo charger assembly not according to the invention,
- Figure 2: shows in a diagram measured imbalance values of components used in the turbo charger assembly according to Figure 1,
- Figure 3A: shows a component of the turbo charger assembly according to Figure 1 in a perspective view,
- Figure 3B: shows a further component of the turbo charger assembly according to Figure 1 in a perspective view, and
- Figure 4: shows a further component of the turbo charger assembly according to Figure 1 in a perspective view.

In the Figures, identical or functionally identical components are provided with the same reference symbols.

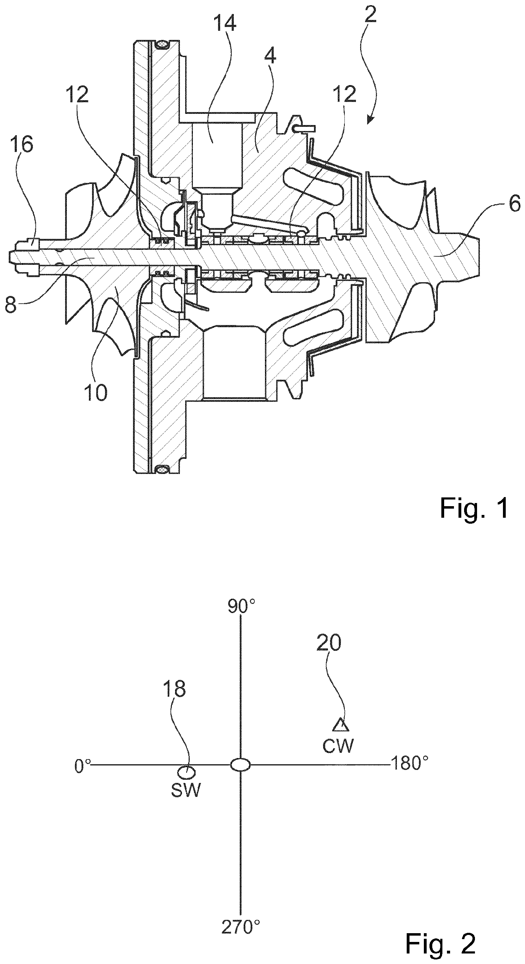

Figure 1 shows an embodiment not according to the invention, wherein a turbo charging assembly 2 is shown in the cross-sectional view. The turbo charging assembly 2 comprises within a housing 4 at least the following components, which are relevant for the invention. The turbo charging assembly 2 includes a turbine wheel 6, which is mounted on a shaft 8. On the opposing end of the shaft 8 compressor wheel 10 is mounted. Exhaust gases impinge on the turbine wheel 6 so that the shaft 8 rotates the compressor wheel 10 as well. During operation the turbo charging assembly 2 rotates at high speed, where revolutions can reach values up to 100,000 RPM or more. In order to allow such high values, the turbo charging assembly 2 with the turbine wheel 6, the shaft 8 and the compressor wheel 10 is mounted within housing 4 using several bearings 12 which are supplied by an oil inlet 14. In addition to those mechanical measures, careful imbalancing steps of the components are necessary.

Typically, the turbine wheel and the compressor wheel as subjected to imbalancing steps separately. For those components, which pass certain threshold values of the remaining imbalance, a so-called core assembly is provided, which includes the turbine wheel 6, the shaft 8, the compressor wheel 10 and further a nut 16 which is used to fix the compressor wheel 10 on the shaft 8. In case the residual imbalance of such a core is above a certain value, the core assembly will be sorted out and cannot be further used.

In order to reduce the scrap rate, the invention provides another approach, which will be outlined now with respect to the Figure 2. Figure 2 depicts a schematic diagram which shows the values of a first imbalance 18 and second imbalance 22 together their relative orientation. Typically, an imbalance is characterized by its amount and its direction, wherein in Figure 2 the amount is depicted by its distance to the center of the coordinate system and the direction is shown as an angular position relative to the depicted angular values. The first imbalance 18 refers in the present example to the combined imbalance of the turbine wheel 6 together with the shaft 8. The first imbalance 18 is located at a first angular position of approximately 0°. The second imbalance 20 depicts the imbalance of the compressor wheel 10. The second imbalance 20 is located at a second angular position of approximately 180°. The first and the second angular position are indicated relative to the same reference point.

According to the prior art, the final assembly involves a random placement without any reference to the imbalances and their orientation with respect to the individual parts. According to the invention however the individual parts are aligned such that the remaining imbalance is reduced.

This is achieved by aligning the compressor wheel 10 on the shaft 8 relative to the turbine wheel 6 such that the second imbalance 20 originating from compressor wheel 10 is oriented opposite to the first imbalance 18 originating from turbine wheel 6 together with shaft 8. This is depicted in Figure 2, where the first imbalance 18 and the second imbalance 20 are aligned relative to each other at an angle of approximately 180°.

In order to allow such alignment of first imbalance 18 and second imbalance 20, each component is marked so that amount and direction of its respective imbalance is indicated.

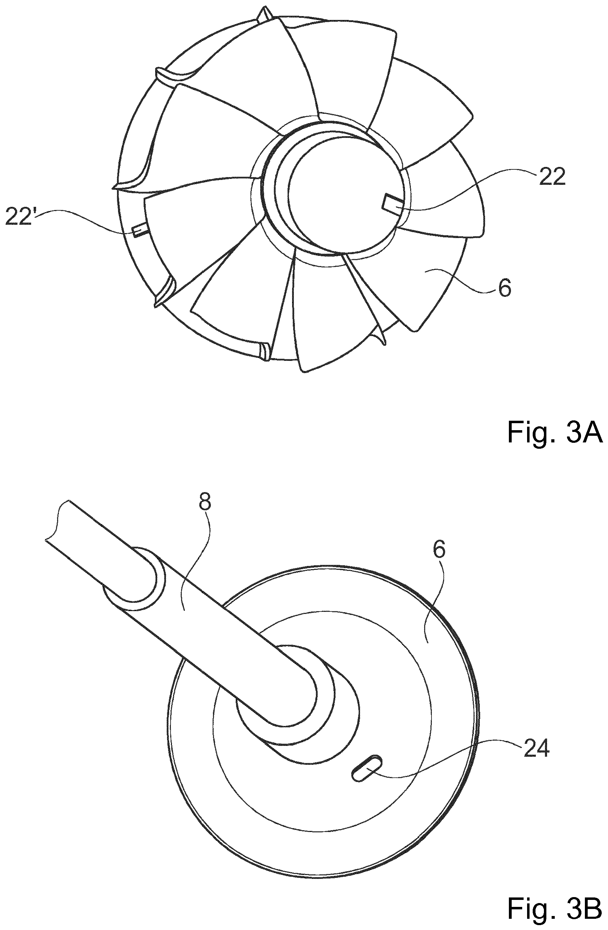

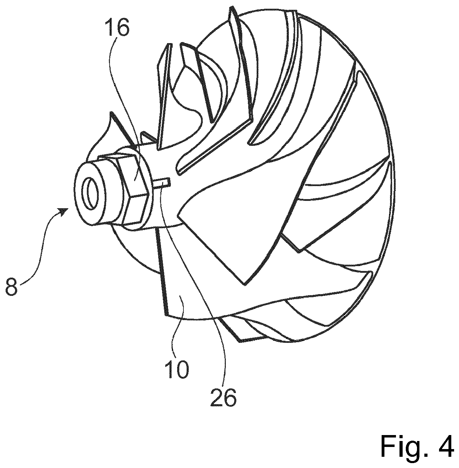

An example of such a marking scheme is now outlined with respect to Figures 3A and 3B for the turbine wheel 6 and the shaft 8 and further with respect to Figure 4 for the compressor wheel 10.

In Figure 3A turbine wheel 6 together with shaft 8 is shown, wherein the respective imbalance of shaft 8 is indicated by a first mark 22 and the respective imbalance of turbine wheel 6 is indicated by a further first mark 22'. The combined imbalance of turbine wheel 6 and shaft 8 is also indicated on the backside of the turbine wheel 6, as shown in Figure 3B. The position of this additional first mark 24 is selected so as to correspond to the amount and direction of the residual imbalance of turbine wheel 6 and shaft 8. It is to be noted that the first mark 22 and the further first mark 22' are determined after an initial imbalance step which can also include removing material of the turbine wheel 6 and/or at the shaft 8 at certain positions in order to reduce the initial imbalance of the turbine wheel 6 and/or at the shaft 8. Accordingly, the first mark 22, the further first mark 22' and the additional first mark 24 indicate the remaining imbalance of the turbine wheel 6 and the shaft 8 after an initial imbalance step. The imbalance step is performed on the turbine wheel 6 and the shaft 8 individually.

With respect to Figure 4 the imbalance of compressor wheel 10 is indicated by second mark 26. Again, the second mark 26 indicates the remaining imbalance of the compressor wheel 10 after an initial imbalance step. Such initial imbalance step may include removing material from the compressor wheel 10 at specific positions.

During assembly, compressor wheel 10 will be mounted on shaft 8 which includes the already mounted turbine wheel 6 using nut 16. The alignment of the components can now be selected using the additional first mark 24 and the second mark 26 so that the relative orientation of the first imbalance 18 and the second imbalance 20 are oriented opposite to each other. It is important that during mounting no further movement of the components takes place. In particular, a tightening step of the nut 16 must be performed carefully in order to prevent a further rotation of the compressor wheel 10 relative to the shaft 8.

By aligning the first imbalance 18 opposite to the second imbalance 20 a counterbalance effect reduces the overall imbalance of the turbo charging assembly 2. This counterbalance effect is maximized when aligning the 2 imbalances exactly opposite to each other. However, in some applications an alignment of the first imbalance 18 relative to the second imbalance 20 at an angle different to 180° might be considered as sufficient. Accordingly, any alignment between the first imbalance 18 and the second imbalance within 10° around 180° is considered as falling under the scope of the present invention.

The above features and the features indicated in the claims as well as those which can be taken from the illustrations can be realized advantageously both individually and in various combinations. The invention is not limited to the exemplary embodiments described, but is defined by the appended claims.

### List of references:

- 2: turbo charging assembly
- 4: housing
- 6: turbine wheel
- 8: shaft
- 10: compressor wheel
- 12: bearing
- 14: oil inlet
- 16: nut
- 18: first imbalance
- 20: second imbalance
- 22: first mark
- 22': further first mark
- 24: additional first mark
- 26: second mark

## Claims

1. A turbo charger assembly (2), in particular within a combustion engine, comprising a shaft (8) with a turbine wheel (6) and a compressor wheel (10) on opposing ends of the shaft (8) within a housing (4), wherein the turbine wheel (6) exhibits a first imbalance (18) together with the shaft (8) in a first angular position and the compressor wheel (10) exhibits a second imbalance (20) in a second angular position, wherein the alignment of the compressor wheel (10) relative to the turbine wheel (6) is such that the orientation of the first imbalance (18) and the second imbalance (20) relative to each other is such that a combined imbalance from the first imbalance (18) and the second imbalance (20) of the assembly (2) is reduced, wherein the first imbalance (18) is indicated by a first mark (24) which is determined in separate imbalance steps of the shaft (8) and the turbine wheel (6), wherein the imbalance of the shaft (8) is indicated by a first shaft mark (22), the imbalance of the turbine wheel (6) is indicated by a first turbine mark (22') and the first mark (24) indicates the remaining imbalance of the turbine wheel (6) and the shaft (8), wherein the second imbalance (20) is indicated by a second mark (26) which is determined during an imbalance step of the compressor wheel (10), and the first mark (24) and the second mark (26) are used for relative orientation of the shaft (8) with the turbine wheel (6) and the compressor wheel (10) during final mounting of the assembly (2).

2. Turbo charger assembly according to claim 1, wherein the first imbalance (18) and the second imbalance (20) are aligned relative to each other at an angle of 180° within a window of 10°.

3. An exhaust gas turbo charger having turbo charger assembly (2) according to claims 1 or 2.

4. Method for assembly of a turbo charger comprising the steps of:
• Providing a shaft (8), a turbine wheel (6) and a compressor wheel (10),
• Determining a first imbalance (18) of the turbine wheel (6) mounted on an end of the shaft (8), wherein determining the first imbalance comprises measuring imbalances of the turbine wheel (6) and of the shaft (8) separately and combining the measurements into the first imbalance, wherein the imbalance of the shaft (8) is indicated by a first shaft mark (22), the imbalance of the turbine wheel (6) is indicated by a first turbine mark (22') and the first mark (24) indicates the remaining imbalance of the turbine wheel (6) and the shaft (8),
• Marking a first angular position on the turbine wheel (6) corresponding to the first imbalance (18),
• Determining a second imbalance (20) of the compressor wheel (10),
• Marking a second angular position on the compressor wheel (10) corresponding to the second imbalance (20), and
• Mounting the compressor wheel (10) on an opposing end of the shaft (8) with an orientation relative to the turbine wheel (6) such that a combined imbalance from the first imbalance (18) and the second imbalance (20) of the assembly (2) is reduced.

5. Method according to claim 4, wherein the orientation between the first angular position and the second angular position has an angle of 180° within a window of 10°.

6. Method according to claim 4 or 5, wherein the mounted assembly is subjected to a further unbalancing step.

7. Method according to any of claims 4 to 6, wherein determining the second imbalance (20) comprises a measurement step of the compressor wheel (10) in a high-speed balancing process.

8. Method according to claim 7, wherein the first angular position and the second angular position are marked.

9. Method according to any of claims 4 to 8, wherein the final mounting of the assembly is performed using the first angular position and the second angular position.

## Patentansprüche

1. Turboladeranordnung (2), insbesondere in einer Brennkraftmaschine, umfassend eine Welle (8) mit einem Turbinenrad (6) und einem Verdichterrad (10) an gegenüberliegenden Enden der Welle (8) in einem Gehäuse (4), wobei das Turbinenrad (6) eine erste Unwucht (18) zusammen mit der Welle (8) in einer ersten Winkelposition aufweist und das Verdichterrad (10) eine zweite Unwucht (20) in einer zweiten Winkelposition aufweist, wobei die Ausrichtung des Verdichterrads (10) relativ zu dem Turbinenrad (6) derart ist, dass die Orientierung der ersten Unwucht (18) und der zweiten Unwucht (20) relativ zueinander derart ist, dass eine kombinierte Unwucht aus der ersten Unwucht (18) und der zweiten Unwucht (20) der Anordnung (2) verringert ist,
wobei die erste Unwucht (18) durch eine erste Markierung (24) angezeigt ist, die in separaten Unwuchtschritten der Welle (8) und des Turbinenrads (6) bestimmt ist, wobei die Unwucht der Welle (8) durch eine erste Wellenmarkierung (22) angezeigt ist, die Unwucht des Turbinenrads (6) durch eine erste Turbinenmarkierung (22') angezeigt ist und die erste Markierung (24) die verbleibende Unwucht des Turbinenrads (6) und der Welle (8) anzeigt,
wobei
die zweite Unwucht (20) durch eine zweite Markierung (26) angezeigt ist, die während eines Unwuchtschritts des Verdichterrads (10) bestimmt ist, und die erste Markierung (24) und die zweite Markierung (26) zur relativen Orientierung der Welle (8) mit dem Turbinenrad (6) und dem Verdichterrad (10) während einer Endmontage der Anordnung (2) verwendet wird.

2. Turboladeranordnung nach Anspruch 1, wobei die erste Unwucht (18) und die zweite Unwucht (20) relativ zueinander in einem Winkel von 180° innerhalb eines Fensters von 10° ausgerichtet sind.

3. Abgasturbolader, der eine Turboladeranordnung (2) nach Anspruch 1 oder 2 aufweist.

4. Verfahren für eine Anordnung eines Turboladers, umfassend die folgenden Schritte:
• Bereitstellen einer Welle (8), eines Turbinenrads (6) und eines Verdichterrads (10),
• Bestimmen einer ersten Unwucht (18) des Turbinenrads (6), das an einem Ende der Welle (8) montiert ist, wobei das Bestimmen der ersten Unwucht separates Messen von Unwuchten des Turbinenrads (6) und der Welle (8) und Kombinieren der Messungen in die erste Unwucht umfasst, wobei die Unwucht der Welle (8) durch eine erste Wellenmarkierung (22) angezeigt ist, die Unwucht des Turbinenrads (6) durch eine erste Turbinenmarkierung (22') angezeigt ist und die erste Markierung (24) die verbleibende Unwucht des Turbinenrads (6) und der Welle (8) anzeigt,
• Markieren einer ersten Winkelposition an dem Turbinenrad (6), die der ersten Unwucht (18) entspricht,
• Bestimmen einer zweiten Unwucht (20) des Verdichterrads (10),
• Markieren einer zweiten Winkelposition an dem Verdichterrad (10), die der zweiten Unwucht (20) entspricht, und
• Montieren des Verdichterrads (10) an einem gegenüberliegenden Ende der Welle (8) mit einer derartigen Orientierung relativ zu dem Turbinenrad (6), dass eine kombinierte Unwucht aus der ersten Unwucht (18) und der zweiten Unwucht (20) der Anordnung (2) verringert wird.

5. Verfahren nach Anspruch 4, wobei die Orientierung zwischen der ersten Winkelposition und der zweiten Winkelposition einen Winkel von 180° innerhalb eines Fensters von 10° aufweist.

6. Verfahren nach Anspruch 4 oder 5, wobei die montierte Anordnung einem weiteren Unwuchtschritt unterzogen wird.

7. Verfahren nach einem der Ansprüche 4 bis 6, wobei das Bestimmen der zweiten Unwucht (20) einen Messschritt des Verdichterrads (10) in einem Hochgeschwindigkeitsauswuchtprozess umfasst.

8. Verfahren nach Anspruch 7, wobei die erste Winkelposition und die zweite Winkelposition markiert werden.

9. Verfahren nach einem der Ansprüche 4 bis 8, wobei die Endmontage der Anordnung unter Verwendung der ersten Winkelposition und der zweiten Winkelposition durchgeführt wird.

## Revendications

1. Ensemble turbocompresseur (2), en particulier dans un moteur à combustion, comprenant un arbre (8) avec une roue de turbine (6) et une roue de compresseur (10) à des extrémités opposées de l'arbre (8) à l'intérieur d'un carter (4), la roue de turbine (6) présentant un premier déséquilibre (18) conjointement avec l'arbre (8) dans une première position angulaire et la roue de compresseur (10) présentant un second déséquilibre (20) dans une seconde position angulaire, l'alignement de la roue de compresseur (10) relativement à la roue de turbine (6) étant tel que l'orientation du premier déséquilibre (18) et du second déséquilibre (20) l'un par rapport à l'autre est tel qu'un déséquilibre combiné résultant du premier déséquilibre (18) et du second déséquilibre (20) de l'ensemble (2) est réduit,
dans lequel le premier déséquilibre (18) est indiqué par une première marque (24) qui est déterminée au cours d'étapes de déséquilibrage séparées de l'arbre (8) et de la roue de turbine (6), le déséquilibre de l'arbre (8) étant indiqué par une première marque d'arbre (22), le déséquilibre de la roue de turbine (6) étant indiqué par une première marque de turbine (22') et la première marque (24) indiquant le déséquilibre restant de la roue de turbine (6) et de l'arbre (8),
dans lequel le second déséquilibre (20) est indiqué par une seconde marque (26) qui est déterminée lors d'une étape de déséquilibrage de la roue de compresseur (10), et la première marque (24) et la seconde marque (26) sont utilisées à des fins d'orientation relative de l'arbre (8) avec la roue de turbine (6) et de la roue de compresseur (10) lors du montage final de l'ensemble (2).

2. Ensemble turbocompresseur selon la revendication 1, dans lequel le premier déséquilibre (18) et le second déséquilibre (20) sont alignés l'un par rapport à l'autre à un angle de 180° dans une plage de variabilité de 10°.

3. Turbocompresseur d'échappement comportant l'ensemble turbocompresseur (2) selon la revendication 1 ou 2.

4. Procédé d'assemblage d'un turbocompresseur comprenant les étapes consistant à :
- préparer un arbre (8), une roue de turbine (6) et une roue de compresseur (10),
- déterminer un premier déséquilibre (18) de la roue de turbine (6) montée à une extrémité de l'arbre (8), le fait de déterminer le premier déséquilibre comprenant le fait de mesurer des déséquilibres de la roue de turbine (6) et de l'arbre (8) séparément et le fait de combiner les mesures pour obtenir le premier déséquilibre, le déséquilibre de l'arbre (8) étant indiqué par une première marque d'arbre (22), le déséquilibre de la roue de turbine (6) étant indiqué par une première marque de turbine (22') et la première marque (24) indiquant le déséquilibre restant de la roue de turbine (6) et de l'arbre (8),
- marquer une première position angulaire sur la roue de turbine (6) correspondant au premier déséquilibre (18),
- déterminer un second déséquilibre (20) de la roue de compresseur (10),
- marquer une seconde position angulaire sur la roue de compresseur (10) correspondant au second déséquilibre (20), et
- monter la roue de compresseur (10) à une extrémité opposée de l'arbre (8) avec une orientation relativement à la roue de turbine (6) telle qu'un déséquilibre combiné résultant du premier déséquilibre (18) et du second déséquilibre (20) de l'ensemble (2) est réduit.

5. Procédé selon la revendication 4, dans lequel l'orientation entre la première position angulaire et la seconde position angulaire correspond à un angle de 180° dans une plage de variabilité de 10°.

6. Procédé selon la revendication 4 ou 5, dans lequel l'ensemble monté est soumis à une étape supplémentaire de déséquilibrage.

7. Procédé selon l'une quelconque des revendications 4 à 6, dans lequel le fait de déterminer le second déséquilibre (20) comprend une étape de mesurage de la roue de compresseur (10) dans un procédé d'équilibrage à haute vitesse.

8. Procédé selon la revendication 7, dans lequel la première position angulaire et la seconde position angulaire sont marquées.

9. Procédé selon l'une quelconque des revendications 4 à 8, dans lequel le montage final de l'ensemble est effectué en utilisant la première position angulaire et la seconde position angulaire.
